# EUROPÄISCHE PATENTSCHRIFT

(11) **EP 1 098 106 B1**
(45) Veröffentlichungstag und Bekanntmachung des Hinweises auf die Patenterteilung: **05.10.2005**
(21) Anmeldenummer: 00123189.3
(22) Anmeldetag: 26.10.2000
(51) Int. Cl.: F16F 7/00, F16F 15/073, F16F 3/02, F16F 1/362

(54) **Dämpfungsanordnung**
Damping arrangement
Arrangement d'amortisseur

(30) Priorität: 05.11.1999 DE 19953455; 02.08.2000 DE 10037581
(43) Veröffentlichungstag der Anmeldung: 09.05.2001
(73) Patentinhaber: Sebert Schwingungstechnik GmbH, 73230 Kirchheim/Teck (DE)
(72) Erfinder: Sebert, Karl, 73230 Kirchheim (DE)
(74) Vertreter: Vetter, Hans

(56) Entgegenhaltungen:
- EP-A- 0 432 436
- EP-A- 0 458 011
- EP-A- 0 860 590
- DE-A- 3 219 360
- DE-A- 4 436 514
- FR-A- 2 695 696
- GB-A- 836 519
- US-A- 2 950 609
- US-A- 4 747 624
- US-A- 4 854 416
- US-A- 5 690 322
- PATENT ABSTRACTS OF JAPAN vol. 011, no. 067 (M-566), 28. Februar 1987 (1987-02-28) -& JP 61 223346 A (KOKU KIKAKU KOGYO KK), 3. Oktober 1986 (1986-10-03)

## Beschreibung

Die Erfindung betrifft eine Dämpfungsanordnung mit wenigstens zwei Halterungen, gemäß dem Oberbegriff des Anspruchs 1.

Eine derartige Dämpfungsanordnung ist beispielsweise aus der US-A-2 950 609 bekannt. Diese bekannte Dämpfungsanordnung ist schlauchartig ausgebildet, wobei die Randbereiche in topfartigen Halterungen zusammengepresst sind.

Aus der US-A- 4 854 416 sind zwar aus zwei Bereichen bestehende ringartige Halterungen bekannt, zwischen denen ein Dämpfungselement eingeklemmt wird, jedoch ist dort ein mehrlagig gewickeltes Band vorgesehen.

Bei einer aus der DE-GM 7306006.7 bekannten Dämpfungsanordnung besteht das Dämpfungselement aus einer Vielzahl von Drahtseilen. Eine solche Anordnung hat den Nachteil, dass die Federsteifigkeit in der Scherungsrichtung deutlich geringer als in der Zug- bzw. Druckrichtung ist, was im Belastungsfall zu Stabilitätsproblemen führen kann.

Aus der US 2 778 629 ist eine Dämpfungsanordnung bekannt, bei der zwei gitterartige Elemente in Form von Kugelsegmentflächen an den Zentren ihrer Außenflächen aneinander fixiert sind. Im keilförmigen Zwischenraum ist eine Schraubenfeder angeordnet, die sich bei einer die beiden Segmente zusammenpressenden Kraft elastisch nach außen verschiebt. Die beiden gitterartigen Segmente sind umfangsseitig nicht fixiert, so dass die gesamte Anordnung nur Kräfte in Druckrichtung, nicht dagegen Kräfte in Zugrichtung dämpfen kann. Darüber hinaus ist der Aufbau dieser bekannten Dämpfungsanordnung aufwendig und teuer.

Eine Aufgabe der vorliegenden Erfindung besteht darin, eine sehr einfach und kostengünstig zu realisierende Dämpfungsanordnung zu schaffen, die ausgewogene Dämpfungseigenschaften und zusätzlich Federeigenschaften in allen drei Raumrichtungen besitzt.

Diese Aufgabe wird erfindungsgemäß durch eine Dämpfungsanordnung mit den Merkmalen des Anspruchs 1 gelöst.

Die Vorteile der erfindungsgemäßen Dämpfungsanordnung bestehen insbesondere darin, dass durch die doppelte Einspannung in den beiden Halterungen die angestrebten Dämpfungseigenschaften in allen drei Raumrichtungen einfach und kostengünstig realisierbar sind, wobei eine solche Dämpfungsanordnung für die automatische Fertigung und auch für die Massenfertigung gut geeignet ist. Es können die unterschiedlichsten Formen und Ausgestaltungen realisiert werden. Die Federsteifigkeit und die Dämpfungseigenschaften in den verschiedenen Richtungen können durch die Formgebung und Art des Geflechts eingestellt und optimiert werden. Auch durch die Gestaltung der Halterungen kann erreicht werden, dass der Befestigungsabstand unabhängig von den Feder-Dämpfereigenschaften variieren kann, wodurch der Einsatz auch bei beengten Raumverhältnissen möglich ist, das heißt, eine Anpassung an die jeweils vorliegenden Einbauverhältnisse kann verbessert erfolgen. Es ist leicht möglich, exakt die gleiche Charakteristik für Zug- und Druckbeanspruchung zu erzeugen, wobei sogar gleiche Federsteifigkeiten in allen drei Raumrichtungen erzielbar sind. Im Stillstand nach Beanspruchung setzt ein Relaxationseffekt ein, das heißt, nach einer gewissen Zeit der Ruhe hat die Dämpfungsanordnung wieder ihre ursprünglichen Eigenschaften. Gegenüber anderen Systemen ist die erfindungsgemäße Dämpfungsanordnung thermisch wesentlich unkritischer, da die Wandlung von kinetischer Energie über Reibung auf einer großen Fläche erfolgt und nicht in einer massiven Struktur, wie dies beispielsweise bei Gummipuffer- oder Drahtseil-Dämpfern der Fall ist.

Das Dämpfungselement bildet dabei eine Art Kuppel, wobei sich über die Höhe der Kuppel die horizontale wie auch vertikale Steifigkeit in entgegengesetzten Richtungen verändern lässt. Bei konstantem Kuppeldurchmesser und größerer Kuppelhöhe wird der Dämpfer vertikal härter, weil mehr Reibungsstellen vorhanden sind, horizontal dagegen weicher.

Durch die in den Unteransprüchen aufgeführten Maßnahmen sind vorteilhafte Weiterbildungen und Verbesserungen der im Anspruch 1 angegebenen Dämpfungsanordnung möglich.

Vorzugsweise ist die zweite Halterung an einem zentralen Halteloch des Dämpfungselements verschraubt, und besitzt bevorzugt eine im wesentlichen pilzartige Gestalt.

Jeweils der kreisförmige Randbereich des Dämpfungselements ist zweckmäßigerweise zwischen zwei Bereichen der ringartigen Halterung verklemmt, wobei die beiden Bereiche vorzugsweise als Ringelemente ausgebildet sind, die miteinander verschraubt, verklebt, vernietet oder verschweißt sind.

Das Dämpfungselement ist vorzugsweise als wenigstens einlagiges Flächenelement ausgebildet, wobei das Drahtgeflecht oder -gewebe aus Metalldraht oder Kunststoff bestehen kann. Durch die Anzahl und Anordnung der Geflechte sowie durch die Dicke und den Abstand der einzelnen Drähte können die gewünschten Eigenschaften erzielt werden.

Ein Ausführungsbeispiel der Erfindung ist in der Zeichnung dargestellt und in der nachfolgenden Beschreibung näher erläutert. Es zeigen:
- Fig. 1: eine perspektivische Darstellung des Ausführungsbeispiels einer Dämpfungsanordnung mit kuppelartigem Dämpfungselement, und
- Fig. 2: eine Querschnittsdarstellung des in Fig. 1 dargestellten Ausführungsbeispiels.

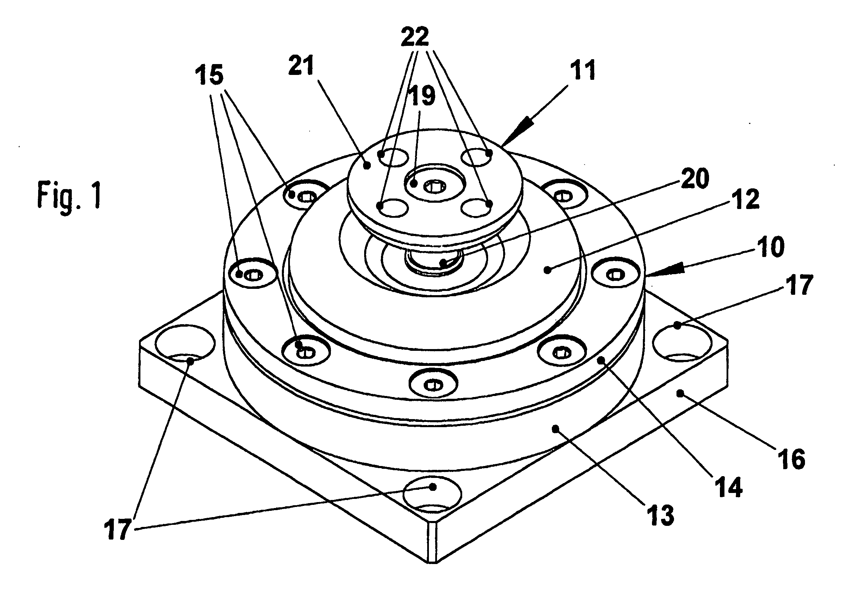

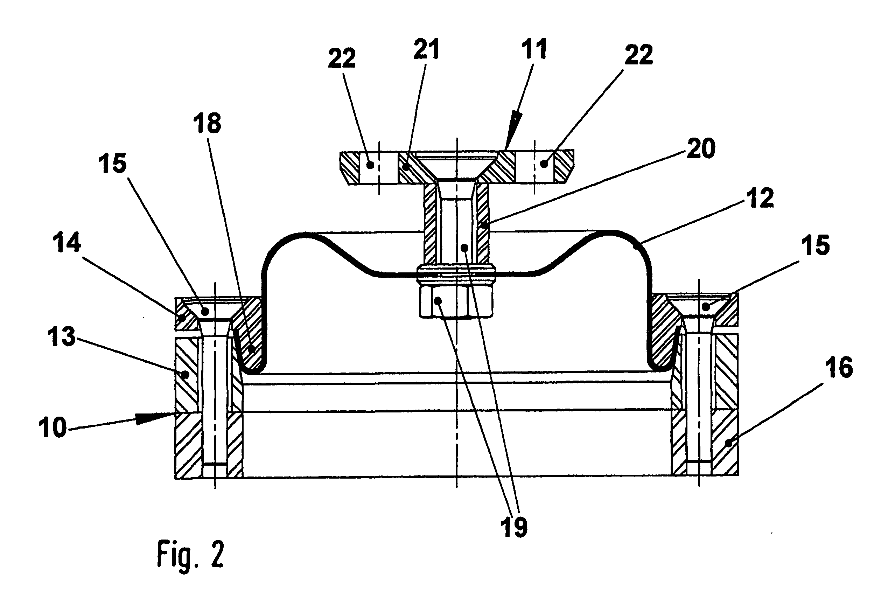

Das in den Fig. 1 und 2 dargestellte Ausführungsbeispiel einer Dämpfungsanordnung besteht im wesentlichen aus zwei Halterungen 10, 11, die über ein als Flächenelement aus einem Drahtgeflecht oder -gewebe ausgebildetes Dämpfungselement 12 miteinander verbunden sind. Das Dämpfungselement 12 kann als einlagiges Geflecht oder Gewebe ausgebildet sein, jedoch sind auch mehrlagige Ausführungen möglich. Bei den Drähten handelt es sich bevorzugt um metallische Drähte, jedoch sind auch Kunststoffdrähte möglich.

Die erste Halterung 10 besteht aus zwei Ringbereichen 13, 14, die miteinander mittels acht über den Umfang verteilten Halteschrauben 15 verschraubt sind. Dabei wird der umfangsseitige Randbereich des eine kreisförmige Umfangslinie besitzenden Dämpfungselements 12 dazwischengeklemmt und dadurch an der Halterung 10 umfangsseitig fixiert. Die gemäß den Fig. 1 und 2 untere Halterung 10 weist noch einen unteren rechteckförmigen, abgesetzten Bereich 16 auf, der einstückig angeformt ist und vier Haltelöcher 17 zur Aufnahme von vier nicht dargestellten Halteschrauben besitzt, durch die die gesamte Dämpfungsanordnung an einer Unterlage oder einem Teil fixiert werden kann, das gegenüber einem anderen Teil gedämpft und/oder federnd gehalten werden soll.

Der obere Ringbereich 14 greift im montierten Zustand mit einem ringwulstartigen Vorsprung in den unteren Ringbereich 13 ein, wobei zwischen dem ringwulstartigen Vorsprung 18 und dem unteren Ringbereich 13 eine Halteschrägfläche gebildet wird, mit deren Hilfe der äußere Randbereich des Dämpfungselements 12 gehalten wird.

Das Dämpfungselement 12 verläuft von der Einspannstelle aus entlang des ringwulstartigen Vorsprungs 18 nach oben vom unteren Ringbereich 13 weg, so dass eine Umlenkung um ca. 160° erfolgt. Das kuppelartig geformte Dämpfungselement 12 verläuft dann mit einer Gegenkrümmung von allen Seiten her zum Zentrum, wo die obere Halterung 11 an einem zentralen Halteloch des Dämpfungselements 12 mittels einer Halteschraube 19 fixiert ist. Dabei wird das Dämpfungselement 12 zwischen der Halteschraube 19 und einem Fuß 20 der pilzartigen Halterung 11 verklemmt und dadurch fixiert. Der scheibenartige Hutbereich 21 der Halterung 11 besitzt wiederum über den Umfang verteilt vier Haltelöcher 22, um die Halterung 11 mittels nicht dargestellter Halteschrauben an einem zweiten nicht dargestellten Teil zu fixieren, das gegenüber dem ersten Teil federnd gehalten bzw. gedämpft werden soll.

Das Dämpfungselement 12 dient zur Reduktion von mechanischen Schwingungen und schockartigen Beanspruchungen zwischen den beiden nicht dargestellten Teilen, also zur Dämpfung oder federnden Lagerung, wobei die Dämpfungs- und Federeigenschaften durch die Formgebung des Dämpfungselements 12, die Art der Halterungen 10, 11 und die Parameter des Geflechts oder Gewebes bestimmt werden, das heißt durch den Werkstoff, den Materialdurchmesser, die Maschenweite, den Kreuzungswinkel und dergleichen. Auch durch mehrlagige Dämpfungselemente 12 können gewünschte Eigenschaften erzielt werden. Durch die Kuppelhöhe des kuppelartigen Dämpfungselements 12 lässt sich die horizontale wie auch vertikale Steifigkeit in entgegengesetzter Richtung verändern, das heißt, es gibt einen Punkt, an dem die Dämpfungsanordnung in allen drei Raumrichtungen gleiche Federsteifigkeiten hat. Bei konstantem Kuppeldurchmesser und größerer Kuppelhöhe wird die Dämpfungsanordnung vertikal härter, weil mehr Reibungsstellen der Drähte des Geflechts vorhanden sind, horizontal dagegen weicher.

Das auf einem Geflecht basierende Dämpfungselement 12 kann durch die Formgebung des Geflechts derart ausgelegt werden, dass es in Scherungsrichtung eine höhere, gleiche oder geringere Federsteifigkeit als in Zug- bzw. Druckrichtung besitzt. Wesentlich dabei ist es, dass das Dämpfungselement 12 zwischen den beiden Halterungen 10, 11 wenigstens zwei gegensinnige Krümmungen besitzt, die eine im wesentlichen kontinuierliche Dämpfungsbewegung in den verschiedenen Richtungen ermöglichen.

In Abwandlung des dargestellten Ausführungsbeispiels können die Ringbereiche 13, 14 der unteren Halterung 10 auch vernietet, verklebt oder miteinander verschweißt sein. Auch eine Fixierung durch Klemmscheiben oder einen umgebördelten Rand an einer aus Blech bestehenden Halterung ist denkbar. Es sind auch asymmetrische Ausgestaltungen möglich. Auch eine kreis- bzw. ringförmige Ausbildung ist nicht zwingend, vielmehr sind auch andere Gestalten, wie ellipsenförmige, rechteckförmige, quadratische, vieleckige Formen, möglich.

In einer weiteren alternativen Ausführung des Ausführungsbeispiels kann sich die pilzartige Halterung 11 auch in entgegengesetzter Richtung erstrecken, das heißt, durch die Halterung 10 hindurch, wobei dann der Fuß 20 je nach Anwendung verlängert sein kann.

Bei einer einfacheren Ausgestaltung können die ringwulstartigen Vorsprünge 18 auch entfallen, und das jeweilige Dämpfungselement wird auf andere Weise in oder an einer ähnlichen Halterung fixiert.

Beim Ausführungsbeispiel kann der rechteckige Bereich 16 mit den Ringbereichen 13, 14 verschraubt oder einstückig an den Ringbereich 13 angeformt sein. Je nach Anwendung kann er auch entfallen oder durch eine anders geformte Halterung ersetzt werden. Dasselbe gilt selbstverständlich auch für die übrigen Ausführungsbeispiele.

Beim dargestellten Ausführungsbeispiel können die Dämpfungseigenschaften noch dadurch verbessert werden, dass die Drähte des Drahtgeflechts der Dämpfungselemente 50, 54, 58, 61 nicht parallel oder senkrecht zu den Halterungen, sondern schräg dazu verlaufen, beispielsweise ist hierzu ein Winkel von 45° besonders geeignet. Eine parallele oder senkrechte Ausrichtung ist selbstverständlich ebenfalls möglich.

## Patentansprüche

1. Dämpfungsanordnung mit wenigstens zwei Halterungen (10, 11), die über wenigsten ein als Flächenelement aus einem Drahtgeflecht oder -gewebe ausgebildetes Dämpfungselement (12) miteinander verbunden sind, wobei die Halterungen (10, 11) an wenigstens zwei unterschiedlichen Bereichen des Dämpfungselements (12) fixiert sind und wobei das Dämpfungselement (12) zwischen den Halterungen (10, 11) wenigstens zwei gegensinnige Krümmungen besitzt, **dadurch gekennzeichnet, dass** die erste ringartige Halterung (10) am umfangsseitigen Randbereich des eine kreisförmige Umfangslinie besitzenden kuppelartig geformten und in den 3 Raumrichtungen zur Erzielung von Feder-Dämpfeigenschaften Federsteifigkeit besitzenden Dämpfungselements (12) und die zweite Halterung (11) an einem zentralen Halteloch des Dämpfungselements (12) fixiert ist.

2. Dämpfungsanordnung nach Anspruch 1, **dadurch gekennzeichnet, dass** die zweite Halterung (11) am zentralen Halteloch des Dämpfungselements (12) verschraubt ist.

3. Dämpfungsanordnung nach Anspruch 1 oder 2, **dadurch gekennzeichnet, dass** die zweite Halterung (11) eine im wesentlichen pilzartige Gestalt besitzt.

4. Dämpfungsanordnung nach einem der vorhergehenden Ansprüche, **dadurch gekennzeichnet, dass** jeweils der kreisförmige Randbereich des Dämpfungselements (12) zwischen zwei Bereichen (13, 14) der ringartigen Halterung (10) verklemmt ist.

5. Dämpfungsanordnung nach einem der vorhergehenden Ansprüche, **dadurch gekennzeichnet, dass** das Dämpfungselement (12; 23; 50; 54; 58; 61) als wenigstens einlagiges Flächenelement ausgebildet ist.

6. Dämpfungsanordnung nach einem der vorhergehenden Ansprüche, **dadurch gekennzeichnet, dass** das Drahtgeflecht oder -gewebe aus Metalldraht oder Kunststoffdraht besteht.

## Claims

1. Damping arrangement with at least two mountings (10, 11) joined to one another by at least one damping element (12) designed as a two-dimensional element made of wire netting or wire mesh, wherein the mountings (10, 11) are attached to at least two different areas of the damping element (12) and wherein the damping element (12) has at least two opposite curvatures between the mountings (10, 11), **characterised in that** the first annular mounting (10) is attached to the circumferential edge area of the damping element (12), which has a circular periphery, is domeshaped and has spring rigidity in the 3 directions in space to obtain spring damping characteristics, and **in that** the second mounting (11) is attached to a central mounting hole of the damping element (12).

2. Damping arrangement according to claim 1, **characterised in that** the second mounting (11) is bolted to the central mounting hole of the damping element (12).

3. Damping arrangement according to claim 1 or 2, **characterised in that** the second mounting (11) has an essentially mushroom-like shape.

4. Damping arrangement according to any of the preceding claims, **characterised in that** the circular edge area of the damping element (12) is clamped between two areas (13, 14) of the annular mounting (10).

5. Damping arrangement according to any of the preceding claims, **characterised in that** the damping element (12; 23; 50; 54; 58; 61) is designed as an at least single-ply two-dimensional element.

6. Damping arrangement according to any of the preceding claims, **characterised in that** the wire netting or wire mesh is made of metal or plastic wire.

## Revendications

1. Dispositif d'amortissement comportant au moins deux fixations (10, 11) qui sont reliées entre elles par au moins un élément d'amortissement (12) réalisé en tant qu'élément plat dans une tresse ou un tissu de fil, les fixations (10, 11) étant fixées sur au moins deux zones différentes de l'élément d'amortissement (12), et l'élément d'amortissement (12) présentant entre les fixations (10, 11) au moins deux courbures de sens contraires, **caractérisé en ce que** la première fixation (10) de type anneau est fixée sur la zone de bordure périphérique de l'élément d'amortissement (12) en forme de coupole et présentant une ligne périphérique de forme circulaire, ainsi qu'une raideur de ressort dans les trois directions spatiales pour obtenir des propriétés d'amortissement de type ressort, et la deuxième fixation (11) est fixée sur un trou de retenue central de l'élément d'amortissement (12).

2. Dispositif d'amortissement selon la revendication 1, **caractérisé en ce que** la deuxième fixation (11) est vissée sur le trou de retenue central de l'élément d'amortissement (12).

3. Dispositif d'amortissement selon la revendication 1 ou 2, **caractérisé en ce que** la deuxième fixation (11) présente une forme sensiblement de type champignon.

4. Dispositif d'amortissement selon l'une des revendications précédentes, **caractérisé en ce que** la zone de bordure de forme circulaire de l'élément d'amortissement (12) est pincée entre deux zones (13, 14) de la fixation (10) de type anneau.

5. Dispositif d'amortissement selon l'une des revendications précédentes, **caractérisé en ce que** l'élément d'amortissement (12 ; 23 ; 50 ; 54 ; 58 ; 61) est réalisé en tant qu'élément plat à au moins une couche.

6. Dispositif d'amortissement selon l'une des revendications précédentes, **caractérisé en ce que** la tresse ou le tissu de fil est constitué de fil métallique ou de fil plastique.
